Europäisches Patentamt

European Patent Office

Office européen des brevets

(19)

(11) Veröffentlichungsnummer: **0 339 367**
**A2**

(12) # EUROPÄISCHE PATENTANMELDUNG

(21) Anmeldenummer: 89106483.4

(22) Anmeldetag: 12.04.89

(51) Int. Cl.⁴: **H02K 5/08 , H02K 5/10 , H02K 5/15**

Ein Antrag gemäss Regel 88 EPÜ auf Berichtigung von Zeichnung 3 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 26.04.88 DE 3814040

(43) Veröffentlichungstag der Anmeldung:
02.11.89 Patentblatt 89/44

(84) Benannte Vertragsstaaten:
AT BE CH DE FR GB IT LI LU NL SE

(71) Anmelder: **Gerhard Berger GmbH & Co. KG**
**Fabrik elektrischer Geräte**
**Breslauer Strasse 7**
**D-7630 Lahr(DE)**

(72) Erfinder: **Schäffer, Claus**
**In den Waldreben 6**
**D-7632 Friesenheim 2(DE)**

(74) Vertreter: **Patentanwälte Dipl.-Ing. Hans**
**Schmitt Dipl.-Ing. Wolfgang Maucher**
**Dreikönigstrasse 13**
**D-7800 Freiburg i.Br.(DE)**

(54) **Elektromotor.**

(57) Ein Elektromotor (1) weist dessen zum Stator gehörende Metallteile dicht umschließende Außenkappen (8, 8a) aus Kunststoff auf. Diese sind in axialer Richtung auf Polkranzschalen des Stators aufgesteckt. Die Außenkappen (8, 8a) bilden gleichzeitig auch die Lagerschilde. Durch die Außenkappen sind die aus Metall bestehenden Polkranzschalen des Stators geschützt, so daß eine aufwendige Oberflächenbehandlung eingespart werden kann. Außerdem sind dadurch separate Lagerschilde nicht erforderlich.

Fig.1

## Elektromotor

Die Erfindung betrifft einen Eiektromotor, insbesondere einen Synchron- oder Schrittmotor, mit einem Stator, der Polkranzschalen mit darin befindlichen Spulen aufweist sowie mit einem Rotor, dessen Welle in stirnseitigen Lagerschilden gelagert ist.

Bei solchen Motoren bilden jeweils zwei Polkränze eine Polkranzschale, in der die zuvor bewikkelte Spule eingesetzt wird. Wenigstens zwei solcher Polkranzschalen werden dann verbunden und an ihren Enden mit plattenförmigen Lagerschilden für die Rotorwellenlagerung versehen.
Um die aus Blech bestehenden Polkranzschalen vor Korrosion zu schützen, sind diese z. B. durch Galvanisieren mit einer entsprechenden Oberflächenbehandlung versehen. Insgesamt ist somit ein vergleichsweise aufwendiger Aufbau vorhanden.

Aufgabe der vorliegenden Erfindung ist es, einen Elektromotor der eingangs erwähnten Art zu schaffen, dessen Aufbau und Montage vereinfacht und der hinsichtlich des Korrosionsschutzes verbessert ist.

Zur Lösung dieser Aufgabe wird erfindungsgemäß insbesondere vorgeschlagen, daß die Lagerschilde Teil von zwei den Stator und dessen Metallteile dicht umschließenden Außenkappen aus Kunststoff sind, welche außen in axialer Richtung auf die Polkranzschalen aufgesteckt sind.
Die Polkranzschalen des Stators sind durch die Außenkappen geschützt, so daß eine galvanische oder andere Qberflächenbehandlung nicht mehr erforderlich ist. Außerdem können separate Lagerschilde eingespart werden. Auch für die Montage ergibt sich eine erhebliche Vereinfachung, da einige Montageschritte entfallen können.

Aus der US-PS 40 45 657 ist zwar ein Motor der eingangs erwähnten Art bekannt, der eine einseitig aufsteckbare Kunststoffkappe hat. Diese dient hier jedoch nur als Axiallager für die Rotorwelle und ergibt keinen Schutz für den übrigen Stator. Außerdem ist in bekannter Weise immer noch ein separates Lagerschild zur Halterung der Wellenlagerung erforderlich.
Auch kennt man bei Motoren anderer Bauart bereits mehrteilige Gehäuse (DE-AS 10 35 256, FR-PS 895 280), die entweder aus Metallbestehen und entsprechend korrosionsempfindlich sind oder aber wo die Gehäuseteile den Stator nicht vollständig umschließen (US-PS 40 48 530).

Nach einer Weiterbildung der Erfindung ist vorgesehen, daß beide Außenkappen gleich ausgebildet sind. Dies ergibt fertigungstechnische und auch hinsichtlich der Montage Vereinfachungen.
Zweckmäßigerweise weist zumindest eine der Außenkappen einen vorzugsweise radial über ihren Außenumfang überstehenden Befestigungsflansch auf. Dieser Befestigungsflansch kann gleich bei der Herstellung mit an die Außenkappen angespritzt werden, so daß auch hierdurch eine wesentliche Vereinfachung bei der Herstellung und Montage vorhanden ist.

Nach einem weiteren Merkmal der Erfindung sind die Außenkappen bei ihren in Montagestellung zueinanderweisenden, inneren Stirnseiten vorzugsweise dicht miteinander verbunden, insbesondere verrastet und/oder verklebt oder verschweißt. Dadurch sind keine zusätzlichen Halte- und Verbindungsmittel erforderlich.
Vorteilhafterweise weisen die inneren Stirnseiten der Außenkappen Anschlagflächen auf. Dadurch ergibt sich eine exakte und gleichmäßige Einbaulänge für den Rotor. Nach einer Weiterbildung der Erfindung ist vorgesehen, daß die Außenkappen mit Eisenpulver, vorzugsweise mit weichmagnetischem Ferritpulver versetzt sind und daß die Polkranzschalen an ihren radial äußeren Seiten offen ausgebildet sind. Die Außenkappen übernehmen hierbei die magnetische Rückschlußfunktion und außerdem ergeben sich durch diesen Aufbau Vorteile beim Bewickeln, da die in den nach außen offenen Polkranzschalen befindlichen Spulenkörper direkt in zusammenmontierter Lage bewickelt werden können.

Zusätzliche Ausgestaltungen der Erfindung sind in den weiteren Unteransprüchen aufgeführt. Nachstehend ist die Erfindung mit ihren wesentlichen Einzelheiten anhand der Zeichnung näher erläutert.

Es zeigt:

Fig. 1 eine zum Teil aufgebrochene Seitenansicht eines erfindungsgemäßen Elektromotors,

Fig. 2 eine Innenansicht einer Außenkappe und

Fig. 3 eine Längsschnittdarstellung eines Motors mit radial nach außen offenen Polkranzschalen.

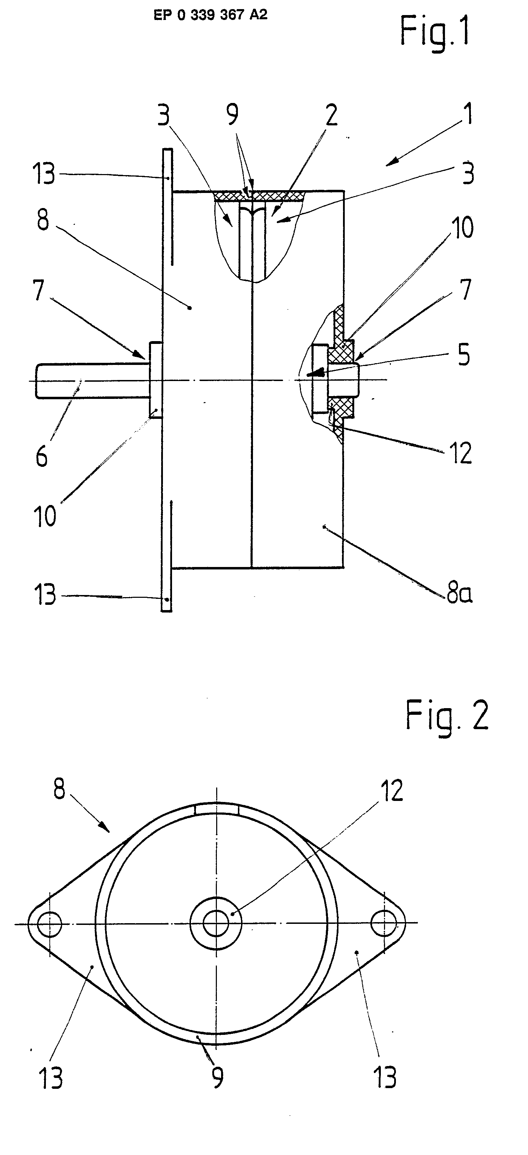

Ein in Fig. 1 und 3 gezeigter Elektromotor 1 weist einen Stator 2 mit Polkranzschalen 3 auf. Innerhalb von diesen Polkranzschalen befinden sich Spulen 4 (vgl. Fig. 3). Innerhalb des Stators 2 ist ein Rotor 5 eingesetzt, dessen Welle 6 in auf der Stirnseite ausgeformten Lagerstellen 7 gelagert ist. Die Lagerstellen 7 befinden sich in Lagerschilden, die Teil von zwei den Stator 2 und dessen Metallteile - Polkranzschalen 3 - dicht umschließenden Außenkappen 8, 8a aus Kunststoff sind. Diese Außenkappen 8, 8a sind von außen in axialer Richtung auf die Polkranzschalen 3 aufgesteckt und liegen mit ihren zueinander weisenden, inneren Stirnseiten 9, die entsprechende Anschläge bilden, dicht aneinander. Durch diese Anschläge und die Länge der Außenkappen ist auch die Einbaulänge für den Rotor 5 festgelegt. Dadurch lassen sich auch in Serie Axialspiele von wenigen Zehntel Millimeter einhalten, so daß ein Einjustieren durch Beilagescheiben nicht erforderlich ist.

Im Bereich ihrer inneren Stirnseiten 9 sind die Außenkappen 8, 8a zweckmäßigerweise dicht miteinander verbunden, so daß der darin befindliche Stator 2 gut geschützt untergebracht ist. Die dichte Verbindung kann z. B. durch entsprechende Rastvorsprünge oder aber durch Verkleben oder Verschweißen realisiert sein. Durch die dichte Kapselung ergibt sich der erhebliche Vorteil, daß für die aus Metall bestehenden Polkranzschalen keine galvanische Behandlung mehr erforderlich ist.

Da die Außenkappen 8, 8a gleichzeitig auch die Lagerschilde bilden, erübrigt sich eine separate Montage von diesen.

In Fig. 1 ist erkennbar, daß die Außenkappen Lageröffnungen zur direkten Lagerung der Rotorwelle 6 aufweisen. Zur Verstärkung und Versteifung im Lagerbereich sind bei der Herstellung der Außenkappen 8, 8a mitangespritzte Lagerstellen in Form von Lagervorsprüngen 10 vorgesehen, die gleichzeitig, durch ihre äußere Gestaltung, die Zentrierung des Motors beim Befestigen ermöglichen.

In Fig. 3 sind zur Lagerung der Welle 6 Lagereinsätze II in Form von zylindrischen Gleitlagern vorgesehen, die in entsprechende Lageröffnungen in den Außenkappen 8, 8a eingepreßt sind.

Die Figuren 1 und 2 lassen im Bereich der Lageröffnung einen nach innen weisenden Vorsprung 12 erkennen, der als Anlage für den Rotor 5 oder ein Rotorteil dient. Zum Befestigen des Motors weist zweckmäßigerweise eine der Außenkappen 8 einen mitangeformten, über den Außenumfang überstehenden Befestigungsflansch 13 auf.

Fig. 3 zeigt noch eine abgewandelte Ausführungsform eines erfindungsgemäßen Elektromotors 1, bei dem die Außenkappen 8, 8a mit einem weichmagnetischen Ferritpulver versetzt sind, was durch die punktierte Darstellung angedeutet ist. In dieser Ausführungsform sind die Polkranzschalen 3 an ihren radial äußeren Seiten offen ausgebildet und vorzugsweise auch in einen Doppelspulenkörper aus Kunststoff miteingebettet. Die metallenen, außen offenen Polkranzschalen bilden so zusammen mit den Spulenkörpern 14 eine Baueinheit. Diese kann in vorteilhafter Weise als fertige Baueinheit bewickelt werden. Auch kann auf einer Seite dieser Einheit bereits eine Lagerung angebracht sein. Nach dem Aufstecken der mit Ferritpulver versetzten Außenkappen 8, 8a sind die bewickelten Spulenkammern auch nach außen hin abgeschlossen, wobei die Außenkappen 8, 8a den magnetischen Rückschluß übernehmen.

Erwähnt sei noch, daß die aus Kunststoff bestehenden Außenkappen 8, 8a zur besseren Wärmeabgabe aus dunklem, insbesondere schwarzen Kunststoff bestehen können. Auch besteht die Möglichkeit, daß eine äußere Verrippung oder dgl. Oberflächenvergrößerung vorgesehen ist, die auch zur Erhöhung der Steifigkeit beiträgt.

Zur weiteren Erhöhung der Korrosionsbeständigkeit kann auch die Rotorwelle und auch die Lagereinsätze aus Keramik bestehen. Weiterhin kann die Welle einseitig in ein Sackloch einer Außenkappe eingreifen, so daß dann die Welle nur über ein Lager nach außen vorsteht. Dadurch ist der Motor praktisch allseitig gekapselt und besonders gut gegen Korrosioneinflüsse geschützt.

Alle in der Beschreibung, den Ansprüchen und der Zeichnung dargestellten Merkmale können sowohl einzeln als auch in beliebiger Kombination miteinander erfindungswesentlich sein.

## Ansprüche

1. Elektromotor, insbesondere Synchron- oder Schrittmotor, mit einem Stator, der Polkranzschalen mit darin befindlichen Spulen aufweist sowie mit einem Rotor, dessen Welle in stirnseitigen Lagerschilden gelagert ist, **dadurch gekennzeichnet,** daß die Lagerschilde Teil von zwei den Stator (2) und dessen Metallteile dicht umschließenden Außenkappen (8, 8a) aus Kunststoff sind, welche außen in axialer Richtung auf die Polkranzschalen (3) aufgesteckt sind.

2. Elektromotor nach Anspruch 1, dadurch gekennzeichnet, daß beide Außenkappen gleich ausgebildet sind.

3. Elektromotor nach Anspruch 1 oder 2, dadurch gekennzeichnet, daß zumindest eine der Außenkappen (8) einen vorzugsweise radial über ihren Außenumfang überstehenden Befestigungsflansch (13) aufweist.

4. Elektromotor nach einem oder mehreren der Ansprüche 1 bis 3, dadurch gekennzeichnet, daß die Außenkappen (8, 8a) bei ihren in Montagestellung zueinander weisenden, inneren Stirnseiten (9) vorzugsweise dicht miteinander verbunden, insbesondere verrastet und/oder verklebt oder verschweißt sind.

5. Elektromotor nach einem oder mehreren der Ansprüche 1 bis 4, dadurch gekennzeichnet, daß die inneren Stirnseiten (9) der Außenkappen (8, 8a) Anschlagflächen aufweisen.

6. Elektromotor nach einem oder mehreren der Ansprüche 1 bis 5, dadurch gekennzeichnet, daß die Außenkappen (8, 8a) Lageröffnungen zur Aufnahme von Lagereinsätzen (11) oder zur direkten Lagerung der Rotorwelle (6) aufweisen.

7. Elektromotor nach einem oder mehreren der Ansprüche 1 bis 6, dadurch gekennzeichnet, daß die Rotorwelle (6) und vorzugsweise auch die Lagereinsätze (11) aus Keramik bestehen.

8. Elektromotor insbesondere nach einem oder mehreren der Ansprüche 1 bis 7, dadurch gekennzeichnet, daß die Außenkappen (8, 8a) mit Eisenpulver, vorzugsweise mit weichmagnetischem Ferritpulver versetzt sind und daß die Polkranzschalen (3) an ihren radial äußeren Seiten offen ausgebildet sind.

9. Elektromotor nach Anspruch 8, dadurch gekennzeichnet, daß die radial außen offenen Polkranzschalen (3) aus Metall in einem Doppelspulenkörper (14) aus Kunststoff eingebettet sind.

10. Elektromotor nach einem oder mehreren der Ansprüche 1 bis 9, dadurch gekennzeichnet, daß die Außenkappen (8, 8a) eine äußere Verrippung oder dgl. Oberflächenvergrößerung aufweisen und vorzugsweise aus dunklem, insbesondere schwarzem Kunststoff bestehen.

11. Elektromotor nach einem oder mehreren der Ansprüche 1 bis 10, dadurch gekennzeichnet, daß die Außenkappen (8, 8a) innenseitig im Bereich der Lageröffnung einen nach innen weisenden Vorsprung (12) aufweisen.

Fig.1

Fig. 2